# EUROPEAN PATENT APPLICATION

(11) **EP 4 682 216 A1**
(43) Date of publication of application: **21.01.2026**
(21) Application number: 24883632.2
(22) Date of filing: 19.11.2024
(51) Int. Cl.: C09J 151/00, H01M 4/66, H01M 4/131, H01M 10/0525, C08F 265/02

(54) **MODIFIED POLYACRYLIC ACID BINDER, CARBON-COATED ALUMINUM FOIL AND BATTERY**

(30) Priority: 08.05.2024 CN 202410567662
(71) Applicant: Eve Power Co., Ltd., Jingmen, Hubei 448000 (CN)
(72) Inventor: LIU, Fanfen, Jingmen, Hubei 448000 (CN); LIU, Qingsong, Jingmen, Hubei 448000 (CN); JIN, Lun, Jingmen, Hubei 448000 (CN); FU, Hang, Jingmen, Hubei 448000 (CN); ZENG, Hongchun, Jingmen, Hubei 448000 (CN)
(74) Representative: Berggren Oy
(86) International application number: PCT/CN2024/132884
(87) International publication number: WO 2025/232142

(57) **Abstract**

A modified polyacrylic acid adhesive, a carbon-coated aluminum foil and a battery are provided in the application. The modified polyacrylic acid adhesive is polymerized from polymerizable monomers. The polymerizable monomers includes an acrylic monomer and a first modified monomer. The acrylic monomer includes at least one of acrylic acid, sodium acrylate, and lithium acrylate. The first modified monomer comprises at least one of p-phenylenediamine, aminoalkanoic acid, styrene, vinyl alcohol, and acrylonitrile.

## Description

This application claims priority to Chinese Patent Application No. 202410567662.0, filed on May 8, 2024, the disclosure of which is incorporated herein by reference in its entirety.

### TECHNICAL FIELD

The present application relates to the technical field of batteries, and more particularly, to a modified polyacrylic acid adhesive, a carbon-coated aluminum foil, and a battery.

### BACKGROUND

The conductive slurry in the carbon-coated aluminum foil is generally composed of materials such as polyacrylic acid (PAA), conductive graphite, conductive carbon black, carbon nanotubes, and the like, and has the effects of reducing the internal resistance of the battery, improving the consistency of the battery, and protecting the current collector from corrosion. The lithium manganese iron phosphate (LMFP) battery, as a new type of lithium battery, represents the future development direction of the battery. Compared with a conventional lithium iron phosphate (LFP) battery, the LMFP battery has a larger energy density, a stronger durability, and a lower manufacturing cost, but the capacity of the LMFP battery is difficult to function due to the low conductivity of the LMFP. With a battery of LMFP positive electrode material, it is necessary to solve the problems of low conductivity of the battery and the consistency of the battery. These problems may be solved more efficiently and at low cost by using the carbon-coated aluminum foil.

### SUMMARY

In the related art, carbon-coated aluminum foils are commonly used in conventional LFP systems, and the peel force is greater than 0.2N after cold pressing of the electrodes. When the carbon-coated aluminum foils in the related art are applied to the LMFP systems, large-area powder removal and peeling-off problems will occur, and defective products are produced (the peel force after cold pressing of the electrode is less than 0.2N). The main reason for the above problems is that: in the related art, carbon-coated aluminum foils are generally prepared using a conventional polyacrylic acid adhesive, which has poor adhesion to aluminum foils and positive electrode materials, and especially to LMFP positive electrode materials having a smaller particle size. Currently, there is no adhesive matched to the LMFP positive electrode main material having a smaller particle size, a large specific surface area, and a large free carbon content.

The present application provides the modified polyacrylic acid adhesive being polymerized from polymerizable monomers; the polymerizable monomers including an acrylic monomer and a first modified monomer; in which the acrylic monomer includes at least one of acrylic acid, sodium acrylate, and lithium acrylate; the first modified monomer includes at least one of p-phenylenediamine, aminoalkanoic acid, styrene, vinyl alcohol, and acrylonitrile; the acrylic monomer is polymerized to form a polyacrylic acid backbone, and the first modified monomer is grafted on the polyacrylic acid backbone.

The present application further provides a carbon-coated aluminum foil including an aluminum foil and a carbon-coated layer coated on the aluminum foil; in which the carbon-coated layer is formed by a conductive slurry; the conductive slurry includes following components in parts by weight: 2 to 6 parts of conductive carbon black, 2 to 7 parts of adhesive, and 1 to 2 parts of conductive graphite; the adhesive is the modified polyacrylic acid adhesive.

The present application further provides a battery including a positive electrode; in which the positive electrode includes the carbon-coated aluminum foil and a positive electrode layer; the positive electrode layer includes a lithium manganese iron phosphate positive electrode main material.

### BENEFICIAL EFFECT

The modified polyacrylic acid adhesive provided in the present application is formed by polymerizing polymerizable monomers including at least an acrylic monomer and a first modified monomer. The modified polyacrylic acid adhesive formed by polymerizing the polymerizable monomers has the polyacrylic acid backbone and the first modified monomer grafted on the polyacrylic acid backbone. In this way, the modified polyacrylic acid adhesive has functional groups and chain segments. Specifically, when the modified polyacrylic acid adhesive is used in a battery, the carboxylate ion in the acrylic monomer can provide a more rapid lithium ion transmission channel, which effectively reduces the impedance and the polarization of the battery, and thus improves the low-temperature performance, the rate performance and the cycle performance of the battery. The functional groups and/or the chain segments in the first modified monomer and the carbon-coated layer on the surface of the positive electrode material (e.g., lithium manganese iron phosphate) are together formed the interaction such as p-π conjugation, π-π conjugation, hydrogen bonding, van der Waals force, and the like. On the one hand, more active sites can be provided, and on the other hand, the peel force of the positive electrode can be improved.

According to the carbon-coated aluminum foil provided in the present application, a modified polyacrylic acid adhesive as described above is used as the adhesive. In this way, the suspension and dispersion ability of the conductive slurry is improved, the formed cross-linked structure can reduce swelling and improve the strength, and the specific group can improve the interaction with graphite particles, and the bonding effect of the carbon-coated aluminum foil can be improved, thereby improving the interface peel force.

According to the battery provided in the present application, by applying the carbon-coated aluminum foil as described above to a LMFP system having a smaller particle size, a larger specific surface area, and a higher free carbon content, it is possible to ensure that the positive electrode does not lose powder or peel off during coating and cold pressing, and that the peel force of the positive electrode after cold pressing is greater than 0.2N and the interface resistance is less than 0.4Ω·cm², thereby meeting the related process requirements of the battery.

### BRIEF DESCRIPTION OF THE DRAWINGS

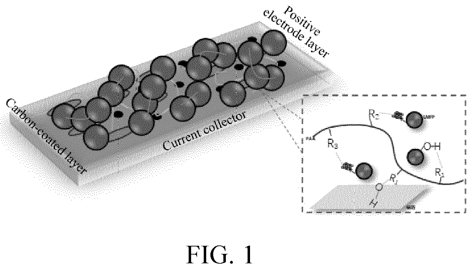

FIG. 1 is a schematic diagram of an adhesion mechanism in a positive electrode according to embodiments of the present application.

### DETAILED DESCRIPTION

In description of the present application, unless otherwise specified and defined, terms "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present application can be understood according to situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

In the description of this embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" are only used to distinguish in terms of description and have no special meanings.

In a first aspect, embodiments of the present application provide a modified polyacrylic acid adhesive polymerized from polymerizable monomers;

where the polymerizable monomers include an acrylic monomer and a first modified monomer;

the acrylic monomer includes at least one of acrylic acid, sodium acrylate, and lithium acrylate;

the first modified monomer includes at least one of p-phenylenediamine, aminoalkanoic acid, styrene, vinyl alcohol, and acrylonitrile;

the acrylic monomer is polymerized to form a polyacrylic acid backbone, and the first modified monomer is grafted on the polyacrylic acid backbone.

The carboxylate ion in the acrylic monomer can provide a faster lithium ion transmission channel, which effectively reduces the impedance and the polarization of the battery, and thus improves the low-temperature performance, the rate performance, and the cycle performance of the battery. When the modified polyacrylic adhesive provided in the present application is applied to the lithium manganese iron phosphate positive electrode, the functional groups and/or the chain segments in the first modified monomer enable to form a hydrogen bond with the aluminum foil of the current collector because the main chain is a polyacrylic acid or a polyacrylate, thereby improving the interfacial force between the carbon-coated layer and the aluminum foil. The first modified monomer copolymerized or blended on the backbone, and the carbon-coated layer on the surface of the positive electrode material (LMFP) are together formed the interaction such as p-π conjugation, π-π conjugation, hydrogen bonding, van der Waals force, and the like. On the one hand, more active sites can be provided, and on the other hand, the peel force of the positive electrode can be improved.

In some embodiments, a mass ratio of the acrylic monomer to the first modified monomer may be (7-10): (1-2). Illustratively, the mass ratio of the acrylic monomer to the first modified monomer may be 8:2, 10: 1, or 7:2.

The proportion of the acrylic monomer is larger, so that the modified polyacrylic acid backbone can be formed by polymerizing the acrylic monomer, and the first modified monomer can be grafted onto the polyacrylic acid backbone, thereby increasing functional groups and chain segments in the modified polyacrylic acid adhesive.

In some embodiments, the polymerizable monomers further include a second modified monomer;

the second modified monomer includes at least one of ethyl acrylate, 2-Ethylhexyl acrylate, methyl acrylate, acrylonitrile, styrene, acrylamide, and hexafluorobutyl acrylate; and the second modified monomer and the first modified monomer are different;

the acrylic monomer and the second modified monomer are copolymerized to form the polyacrylic acid backbone.

That is, the second modified monomer and the acrylic monomer are copolymerized to form the polyacrylic acid backbone of the modified polyacrylic acid adhesive, and functional groups in the first modified monomer are connected to the polyacrylic acid backbone in a grafting manner.

On the one hand, the functional groups and/or the chain segments in the second modified monomer can ensure that the modified polyacrylic acid adhesive formed has a lower glass transition temperature, so that the modified polyacrylic acid adhesive has strong viscoelasticity and flexibility. On the other hand, the functional groups and/or the chain segments in the second modified monomer can improve the mechanical strength of the modified polyacrylic acid adhesive.

In some embodiments, a mass ratio of the acrylic monomer, the first modified monomer, and the second modified monomer is (6-8): (1-2): (1-2).

Illustratively, the mass ratio of the acrylic monomer, the first modified monomer, and the second modified monomer may be 6:2:2, 8:1:1, or 7:2:1.

The proportion of the acrylic monomer is large, so that the backbone of the modified polyacrylic adhesive can be formed, and the functional groups and the chain segments are increased in both the first modified monomer and the second modified monomer, so as to modify the polyacrylic adhesive.

In some embodiments, the acrylic monomer is the acrylic acid, the first modified monomer is the styrene, and the second modified monomer is the acrylamide.

The acrylic monomer, the first modified monomer, and the second modified monomer may be further selected from other materials. For example, the acrylic monomer is the acrylic acid, and the first modified monomer is the acrylonitrile. Alternatively, the acrylic monomer is the acrylic acid, and the first modified monomer is the styrene. Alternatively, the acrylic monomer is the acrylic acid, the first modified monomer is the acrylonitrile, and the second modified monomer is the acrylamide.

In some embodiments, the glass transition temperature of the modified polyacrylic acid adhesive is 10°C-80°C. Illustratively, the glass transition temperature of the modified polyacrylic acid adhesive may be 10 °C, 15 °C, 20 °C, 25 °C, 30 °C, 35 °C, 40 °C, 45 °C, 50 °C, 55 °C, 60 °C, 65 °C, 70 °C, 75 °C, or 80 °C.

In the embodiment of the present application, the glass transition temperature of the modified polyacrylic acid adhesive is 10-80°C, and the modified polyacrylic acid adhesive has a stronger viscoelasticity and flexibility. So, the modified polyacrylic acid adhesive can provide a stronger adhesive property when the modified polyacrylic acid adhesive is used in the carbon-coated aluminum foil.

The long chain in the modified polyacrylic acid adhesive provided in the present application can improve suspension and dispersion ability, the cross-linked structure can reduce swelling and improve strength, and the specific group can improve interaction with graphite particles.

Further, when the polymerizable monomers only include the acrylic monomer and the first modified monomer, the manufacture method of the modified polyacrylic acid adhesive includes:
mixing a first modified monomer, an emulsifier, and deionized water to obtain a suspension liquid;
ultrasonically dispersing the acrylic monomer and a chain transfer agent to obtain a monomer mixture;
mixing a part of the monomer mixture, the suspension liquid and an initiator to obtain a seed emulsion;
adding dropwise slowly a remaining part of the monomer mixture to the seed emulsion, adding a neutralizing agent, after stirring and mixing, to obtain a modified polyacrylic acid adhesive.

When the polymerizable monomers include an acrylic monomer, a first modified monomer, and a second modified monomer, a manufacture method of a modified polyacrylic acid adhesive includes:
mixing the first modified monomer, an emulsifier, and deionized water to obtain a suspension liquid;
ultrasonically dispersing the acrylic monomer, the second modified monomer, and a chain transfer agent to obtain a monomer mixture;
mixing a part of the monomer mixture, the suspension liquid and an initiator to obtain a seed emulsion;
adding dropwise slowly a remaining portion of the monomer mixture to the seed emulsion, adding a neutralizing agent, after stirring and mixing, to obtain a modified polyacrylic acid adhesive.

The emulsifier may be 1-Hexadecylpyridinium bromide, N-dodecyldimethylamine, or the like. The chain transfer agent may be 1-Dodecanethiol, isooctyl 3-mercaptoacrylate, or the like. The initiator may be sodium persulfate, ammonium persulfate, or the like. The neutralizing agent may be sodium bicarbonate, ammonia, or the like.

It is to be noted that the above-described manufacture method is merely exemplary and is not intended to limit the protection scope of the present application.

In a second aspect, embodiments of the present application provide a carbon-coated aluminum foil including an aluminum foil and a carbon-coated layer coated on the aluminum foil;
the carbon-coated layer is prepared from a conductive slurry; the conductive slurry includes following components in parts by weight: 2 to 6 parts of conductive carbon black, 2 to 7 parts of an adhesive, and 1 to 2 parts of conductive graphite;
the adhesive is the modified polyacrylic acid adhesive as described above.

Since the modified polyacrylic acid adhesive includes a polyacrylic acid backbone, and the functional groups and the chain segments are polymerized therein, the suspending and dispersing ability of the conductive slurry is improved, the formed cross-linked structure can reduce swelling and improve strength, and the specific groups can enhance interaction with graphite particles.

With a percentage of the adhesive being too high, although the bonding effect of the carbon-coated aluminum foil can be further improved, and the interface peel force can be improved, the interface resistance of the obtained positive electrode is changed to large. However, with a percentage of the adhesive being too low, the poor adhesion is resulted, which causes insufficient interface peel force, and even causes the positive electrode to peel off from the carbon-coated aluminum foil during the coating process of the positive electrode. Therefore, the conductive slurry provided in the present embodiments includes following components in parts by weight: 2 to 6 parts of conductive carbon black, 2 to 7 parts of an adhesive, and 1 to 2 parts of conductive graphite.

Illustratively, a mass ratio of the conductive carbon black, the adhesive, and the conductive graphite may be 2:7:1, 6:2:2, 4:4:1, 5:3:2, or 3:6:1.

Among them, the conductive graphite is preferably flake graphite. The flake graphite is thin and good in toughness, has excellent physical properties, and has the advantages of high electron conductivity, large lithium ion diffusion coefficient, high lithium intercalation capacity, and the like.

In some embodiments, the conductive slurry has a solid content of 6-15%, a pH of 3 to 6, and a viscosity of 50-300 mPa·s.

Illustratively, the solid content of the conductive slurry may be 6%, 8%, 10%, or 15%, the pH may be 3, 4, 5, or 6, and the viscosity may be 100 mPa·s, 180 mPa·s, 200 mPa·s, or 280 mPa·s.

When the solid content is lower, the flow of the conductive slurry is good to easily coat, the surface density of the formed carbon-coated layer is lower, and the drying efficiency after coating is reduced. The solid content of the conductive slurry is selected to be controlled at 6-15%, taking into account the requirements of the surface density of the carbon-coated layer and ensuring the drying efficiency.

The pH is related to the viscosity of the conductive slurry and affects the cross-linking state of the adhesive in the conductive slurry. When the pH is near neutral, the viscosity of the conductive slurry is larger, so that it is unfavorable for coating, whereas the cross-linking structure of the conductive slurry is increased, thereby increasing the adhesion force of the carbon-coated layer. Therefore, in the present embodiments, the pH is selected to be 3 to 6, which ensures that the conductive slurry has an appropriate viscosity to facilitate to coat, and increases the cross-linking structure of the conductive slurry. So, it can ensure the adhesion force of the carbon-coated layer, thereby improving the peel force of the electrode.

The viscosity of the conductive slurry directly affects the coating effect of the conductive slurry. Too high viscosity can lead to uneven coating of the conductive slurry and affect the conductive performance of the carbon-coated layer. Too low viscosity can lead to poor flowability of the conductive slurry and can not form a smooth coating structure. Therefore, in this embodiment, the viscosity of the conductive slurry is selected to be 50-300 mPa·s.

In some embodiments, the conductive carbon black has a specific surface area of 50-70m²/g and a powder resistivity of less than or equal to 0.4Ω·cm;

The conductive graphite has a particle size D50 of 4-10µm and a tap density of 0.10-0.20g/cm³.

Further, the conductive carbon black may have an oil-absorption value of 200-300mL/100g and a tap density of 0.04-0.20g/cm³. The specific surface area of the conductive graphite may be 7-10m²/g.

Illustratively, the conductive carbon black may have a specific surface area of 50 m²/g, 55 m²/g, 60 m²/g or 70m²/g; an oil-absorption value of 200 mL/100g, 250 mL/100g or 300mL/100g; a tap density of 0.05 g/cm³, 0.10 g/cm³ or 0.15 g/cm³, and a powder resistivity of 0.1Ω·cm or 0.2Ω·cm. The conductive graphite may have a particle size D50 of 4µm, 7µm, 8µm, or 10µm, a specific surface area of 7 m²/g, 8 m²/g, 9 m²/g, or 10 m²/g, and a tap density of 0.10 g/cm³, 0.13 g/cm³, 0.16 g/cm³, or 0.20g/cm³.

Generally, parameters such as particle size and specific surface area of the conductive carbon black and the conductive graphite affect the conductive property of the carbon-coated layer. The smaller the particle size, the larger the specific surface area, and the better the electrical conductivity. This mainly because the particles with small particle sizes are able to better fill the voids; and the large specific surface area can increase the affinity among the conductive carbon black, the conductive graphite, and the adhesive, so that the adhesive can better clad the conductive carbon black and the conductive graphite, thereby effectively reducing the interface resistance between the carbon-coated layer and the substrate. However, a particle size is too small and a specific surface area is too large, which can cause the conductive carbon black and the conductive graphite to agglomerate in the conductive slurry. So, the good dispersion is not realized, and the conductive property is affected. The parameters for the conductive carbon black and the conductive graphite in this embodiment are selected and set as above.

In some embodiments, the carbon-coated layer is disposed on opposite sides of the aluminum foil, a total thickness of the carbon-coated layer in the carbon-coated aluminum foil is 0.2-4µm, and a surface density of the carbon-coated layer is 0.2-2.0g/m².

Illustratively, the total thickness of the carbon-coated layer may be 0.2 µm, 1 µm, 2 µm, or 4 µm, and the surface density of the carbon-coated layer may be 0.2 g/m², 1 g/m², 1.5 g/m², or 2 g/m².

In some embodiments, a manufacture method of a conductive slurry includes:
mixing an adhesive and deionized water to obtain a first mixture;
adding conductive carbon black and conductive graphite to the first mixture to obtain a second mixture;
adding deionized water to the second mixture, adjusting a solid content, a viscosity, and a pH of the second mixture, after sieving and demagnetizing, to obtain a conductive slurry.

In some embodiments, a manufacture method of a carbon-coated aluminum foil includes:
deoiling an aluminum foil;
coating the conductive slurry on the aluminum foil, after drying and cutting, to obtain a carbon-coated aluminum foil.

The aluminum foil may be deoiled by a corona treatment machine, and the coating method may be a gravure-coating method.

The manufacture methods for the conductive slurry and the carbon-coated aluminum foil provided in the embodiments of the present application are simple in process, low in cost and free of pollution.

In a third aspect, embodiments of the present application provide a battery including a positive electrode;
the positive electrode includes the carbon-coated aluminum foil and a positive electrode layer;
the positive electrode layer includes a LMFP positive electrode main material.

That is, the carbon-coated aluminum foil is applied to the LMFP battery.

According to the battery provided in the embodiments of the present application, by applying the carbon-coated aluminum foil to a LMFP system having a relatively small particle size, a relatively large specific surface area, and a relatively high free carbon content, it is possible to ensure that the positive electrode does not lose powder or peel off during coating and cold pressing, and that the peel force of the positive electrode after cold pressing is greater than 0.2N and the interface resistance is less than 0.4Ω·cm², thereby meeting the related process requirements of the battery.

As shown in FIG. 1, the current collector in FIG. 1 is an aluminum foil. The carbon-coated layer is coated with a conductive slurry provided in an embodiments of the present application, and the positive electrode layer is formed by coating a LMFP positive electrode main material. Since the above-mentioned modified polyacrylic acid adhesive is added to the carbon-coated layer, the multiple functional groups and the multiple chain segments (including some flexible chain segments) are in the modified polyacrylic acid adhesive, it can facilitate the flexible chain segments to creep and micro-penetrate toward the positive electrode layer during the baking process after coating the LMFP positive electrode main material. So, the carbon-coated layer actively adheres to the positive electrode layer, and the modified polyacrylic acid adhesive in the carbon-coated layer and the surface of the LMFP are together formed the interaction such as p-π conjugation, π-π conjugation, hydrogen bonding, van der Waals force, and the like, thereby improving the adhesion force between the carbon-coated aluminum foil and the positive electrode layer.

In some embodiments, the LMFP positive electrode main material has a particle size D50 of 0.5-1.5µm, a specific surface area of 10-40m²/g, a carbon content of 1%-2.5%, and a carbon-layer cladding thickness of 1-20nm.

Illustratively, the particle size D50 of the LMFP positive electrode main material may be 0.5 µm, 1.0µm, or 1.5 µm, the specific surface area of the LMFP positive electrode main material may be 10 m²/g, 25 m²/g, or 40m²/g, the carbon content of the LMFP positive electrode main material may be 1%, 2%, or 2.5%, and the carbon-layer cladding thickness of the LMFP positive electrode main material may be 1 nm, 10 nm, or 20 nm.

The LMFP with a small particle size has a larger specific surface area. When the LMFP with the small particle size is applied to a battery, more active substances can participate in an electrochemical reaction while having a shorter ion diffusion path, thereby facilitating the intercalation and deintercalation reactions of lithium ions, and further improving the discharge performance and the cycle life of the battery. In addition, the LMFP positive electrode main material with the small particle size can be better filled in the electrodes of the battery, so that the density of the electrodes is increased, the internal resistance of the battery is reduced, and the energy conversion efficiency of the battery is improved.

The present application is further illustrated in combination with specific examples. It is to be understood that these examples are merely illustrative of the present application and are not intended to limit the scope of the present application. The experimental methods in the following examples where specific conditions are not specified are generally carried out in accordance with the conditions recommended by the manufacturers.

It should be noted that the manufacture methods of the carbon-coated aluminum foil and the positive electrode in Examples 1 to 4 and Comparative Examples 1 to 4 are the same, whereas the selection of the monomers in the modified polyacrylic acid adhesive, the ratio of the conductive carbon black, the adhesive and the conductive graphite in the conductive slurry, and the parameters of the lithium manganese iron phosphate (LMFP) are different.

The manufacture method of the carbon-coated aluminum foil is as follows.

Conductive carbon black, a modified polyacrylic acid adhesive and conductive graphite are mixed in proportion, and deionized water is added to obtain a mixture, and the mixture is uniformly stirred to obtain a conductive slurry; the conductive slurry is coated on an aluminum foil, and the aluminum foil after being coated is dried and slitted to obtain a carbon-coated aluminum foil.

The manufacture method of the positive electrode is as follows.

LMFP, polyvinylidene fluoride (PVDF), conductive carbon black, and carbon nanotubes (CNTs) are mixed according to a mass ratio of 97:2:0.5:0.5 to obtain a mixture; the mixture is mixed with an N-methylpyrrolidone (NMP) solvent to be coated on the carbon-coated aluminum foil; and the carbon-coated aluminum foil after being coated is subjected to drying, cold pressing, and die cutting to obtain a positive electrode.

A blank example is provided as a comparison. In the blank example, the above-mentioned carbon-coated aluminum foil is not used; LMFP, polyvinylidene fluoride (PVDF), conductive carbon black, and carbon nanotubes (CNTs) are mixed according to a mass ratio of 97:2:0.5:0.5 to obtain a mixture; the mixture is added to an N-methylpyrrolidone (NMP) solvent to obtain a positive electrode slurry; the positive electrode slurry is coated on an aluminum foil, and the aluminum foil after being coated is subjected to drying, cold pressing, die cutting, and the like to obtain a positive electrode.

### Example 1

The modified polyacrylic acid adhesive in this example is formed by polymerizing an acrylic monomer and a first modified monomer, in which the acrylic monomer is acrylic acid and the first modified monomer is styrene. Specifically, in preparing the modified polyacrylic acid adhesive, the polymerizable monomer includes 8 parts of acrylic acid and 2 parts of styrene; then the acrylic acid and the styrene are polymerized to enable the acrylic acid to be polymerized to form a polyacrylic acid backbone, and the styrene is grafted on the polyacrylic acid backbone.

The conductive slurry includes following components in parts by weight: 2 parts of conductive carbon black, 7 parts of modified polyacrylic acid adhesive, and 1 part of conductive graphite. Specifically, the conductive slurry provided in this example has a solid content of 10%, a pH of 4, and a viscosity of 180 mPa·s.

The conductive carbon black has a specific surface area of 60m²/g, an oil-absorption value of 250mL/100g, a tap density of 0.10g/cm³, and a powder resistivity of 0.2Ω·cm. The conductive graphite has a particle size D50 of 7µm, a specific surface area of 9m²/g, and a tap density of 0.13g/cm³. The parameters of the LMFP used in this example are: a particle size D50 of 0.5 µm, a specific surface area of 40 m²/g, a carbon content of 2.5%, and a carbon-layer cladding thickness of 20 nm.

In the carbon-coated aluminum foil, the carbon-coated layer is disposed on opposite two sides of the aluminum foil, the total thickness of the carbon-coated layer is 2 µm, and the surface density of the carbon-coated layer is 1g/m².

### Example 2

The modified polyacrylic acid adhesive in this example is formed by polymerizing an acrylic monomer and a first modified monomer, where the acrylic monomer is acrylic acid and the first modified monomer is styrene. Specifically, in preparing the modified polyacrylic acid adhesive, the polymerizable monomer includes 10 parts of acrylic acid and 1 part of styrene; then the acrylic acid and the styrene are polymerized to enable the acrylic acid to be polymerized to form a polyacrylic acid backbone, and the styrene is grafted on the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 60m²/g, an oil-absorption value of 250mL/100g, a tap density of 0.10g/cm³, and a powder resistivity of 0.2Ω·cm. The conductive graphite has a particle size D50 of 7µm, a specific surface area of 9m²/g, and a tap density of 0.13g/cm³.

The parameters of the LMFP used in this example are: a particle size D50 of 0.5µm, a specific surface area of 40 m²/g, a carbon content of 2.5%, and a carbon-layer cladding thickness of 20 nm.

In the carbon-coated aluminum foil, the carbon-coated layer is disposed on opposite two sides of the aluminum foil, the total thickness of the carbon-coated layer is 2 µm; and the surface density of the carbon-coated layer is 1g/m².

### Example 3

The modified polyacrylic acid adhesive is formed by polymerizing an acrylic monomer, a first modified monomer, and a second modified monomer, where the acrylic monomer is acrylic acid, the first modified monomer is styrene, and the second modified monomer is acrylamide. Specifically, in preparing the modified polyacrylic acid adhesive, the polymerizable monomer includes 7 parts of acrylic acid, 1.5 parts of styrene, and 1.5 parts of acrylamide; then the acrylic acid and the acrylamide are copolymerized to form a polyacrylic acid backbone, and the styrene is grafted on the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 60m²/g, an oil-absorption value of 250mL/100g, a tap density of 0.10g/cm³, and a powder resistivity of 0.2Ω·cm. The conductive graphite has a particle size D50 of 7µm, a specific surface area of 9m²/g, and a tap density of 0.13g/cm³.

The parameters of the LMFP used in this example are: a particle size D50 of 0.5µm, a specific surface area of 40 m²/g, a carbon content of 2.5%, and a carbon-layer cladding thickness of 20 nm.

In the carbon-coated aluminum foil, the carbon-coated layer is disposed on opposite two sides of the aluminum foil, the total thickness of the carbon-coated layer is 2 µm, and the surface density of the carbon-coated layer is 1g/m².

### Example 4

The modified polyacrylic acid adhesive is formed by polymerizing an acrylic monomer and a first modified monomer, where the acrylic monomer is acrylic acid and the first modified monomer is styrene. Specifically, in preparing the modified polyacrylic acid adhesive, the polymerizable monomer includes 10 parts of acrylic acid and 1 part of styrene; then the acrylic acid and the styrene are polymerized to enable the acrylic acid to be polymerized to form a polyacrylic acid backbone, and the styrene is grafted on the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 60m²/g, an oil-absorption value of 250mL/100g, a tap density of 0.10g/cm³, and a powder resistivity of 0.2Ω·cm. The conductive graphite has a particle size D50 of 7µm, a specific surface area of 9m²/g, and a tap density of 0.13g/cm³.

The parameters of the LMFP used in this example are: a particle size D50 of 1.5µm, a specific surface area of 10 m²/g, a carbon content of 1%, and a carbon-layer cladding thickness of 1 nm.

In the carbon-coated aluminum foil, the carbon-coated layer is disposed on opposite two sides of the aluminum foil, the total thickness of the carbon-coated layer is 2µm, and the surface density of the carbon-coated layer is 1g/m².

### Example 5

The modified polyacrylic acid adhesive in this example is formed by polymerizing an acrylic monomer and a first modified monomer, where the acrylic monomer is acrylic acid and the first modified monomer is acrylonitrile. Specifically, in preparing the modified polyacrylic acid adhesive, the polymerizable monomer includes 7 parts of acrylic acid and 2 parts of acrylonitrile; then the acrylic acid and the acrylonitrile are polymerized to enable the acrylic acid to be polymerized to form a polyacrylic acid backbone, and the acrylonitrile is grafted on the polyacrylic acid backbone.

The conductive slurry includes the following components in parts by weight: 4 parts of conductive carbon black, 4 parts of modified polyacrylic acid adhesive, and 1 part of conductive graphite. Specifically, the conductive slurry provided in this example has a solid content of 15%, a pH of 6, and a viscosity of 280 mPa·s.

The conductive carbon black has a specific surface area of 60m²/g, an oil-absorption value of 200mL/100g, a tap density of 0.10g/cm³, and a powder resistivity of 0.2Ω·cm. The conductive graphite has a particle size D50 of 8µm, a specific surface area of 8m²/g, and a tap density of 0.16g/cm³.

The parameters of the LMFP used in this example are: a particle size D50 of 1.5µm, a specific surface area of 10 m²/g, a carbon content of 1%, and a carbon-layer cladding thickness of 2 nm.

In the carbon-coated aluminum foil, the carbon-coated layer is disposed on opposite two sides of the aluminum foil, the total thickness of the carbon-coated layer is 0.2 µm, and the surface density of the carbon-coated layer is 0.2g/m².

### Example 6

The modified polyacrylic acid adhesive in this example is formed by polymerizing an acrylic monomer and a first modified monomer, where the acrylic monomer is acrylic acid and the first modified monomer is p-phenylenediamine. Specifically, in preparing the modified polyacrylic acid adhesive, the polymerizable monomer includes 7 parts of acrylic acid and 2 parts of p-phenylenediamine; then the acrylic acid and the p-phenylenediamine are polymerized to enable the acrylic acid to be polymerized to form a polyacrylic acid backbone, and the p-phenylenediamine is grafted on the polyacrylic acid backbone.

The conductive slurry includes the following components in parts by weight: 5 parts of conductive carbon black, 3 parts of modified polyacrylic acid adhesive, and 2 parts of conductive graphite. Specifically, the conductive slurry provided in this example has a solid content of 8%, a pH of 5, and a viscosity of 200 mPa·s.

The conductive carbon black has a specific surface area of 60m²/g, an oil-absorption value of 200mL/100g, a tap density of 0.10g/cm³, and a powder resistivity of 0.2Ω·cm. The conductive graphite has a particle size D50 of 10µm, a specific surface area of 7m²/g, and a tap density of 0.20g/cm³.

The parameters of the LMFP used in this example are: a particle size D50 of 1.5µm, a specific surface area of 10 m²/g, a carbon content of 1%, and a carbon-layer cladding thickness of 2 nm.

In the carbon-coated aluminum foil, the carbon-coated layer is disposed on opposite two sides of the aluminum foil, the total thickness of the carbon-coated layer is 4µm, and the surface density of the carbon-coated layer is 2g/m².

### Example 7

The modified polyacrylic acid adhesive in this example is formed by polymerizing an acrylic monomer and a first modified monomer, where the acrylic monomer is acrylic acid and the first modified monomer is vinyl alcohol. Specifically, in preparing the modified polyacrylic acid adhesive, the polymerizable monomer includes 7 parts of acrylic acid and 2 parts of vinyl alcohol; then the acrylic acid and the vinyl alcohol are polymerized to enable the acrylic acid to be polymerized to form a polyacrylic acid backbone, and the vinyl alcohol is grafted on the polyacrylic acid backbone.

The conductive slurry includes the following components in parts by weight: 3 parts of conductive carbon black, 6 parts of modified polyacrylic acid adhesive, and 1 part of conductive graphite. Specifically, the conductive slurry provided in this example has a solid content of 12%, a pH of 6, and a viscosity of 300 mPa·s.

The conductive carbon black has a specific surface area of 60m²/g, an oil-absorption value of 200mL/100g, a tap density of 0.10g/cm³, and a powder resistivity of 0.2Ω·cm. The conductive graphite has a particle size D50 of 4µm, a specific surface area of 10m²/g, and a tap density of 0.10g/cm³.

The parameters of the LMFP used in this example are: a particle size D50 of 1.5µm, a specific surface area of 10 m²/g, a carbon content of 1%, and a carbon-layer cladding thickness of 2 nm.

In the carbon-coated aluminum foil, the carbon-coated layer is disposed on opposite two sides of the aluminum foil, the total thickness of the carbon-coated layer is 2µm, and the surface density of the carbon-coated layer is 1g/m².

### Example 8

The modified polyacrylic acid adhesive is formed by polymerizing an acrylic monomer, a first modified monomer, and a second modified monomer, where the acrylic monomer is sodium acrylate, the first modified monomer is an aminoalkanoic acid, and the second modified monomer is methyl acrylate. Specifically, in preparing the modified polyacrylic acid adhesive, the polymerizable monomer includes 6 parts of sodium acrylate, 2 parts of aminoalkanoic acid, and 2 parts of methyl acrylate; then the sodium acrylate and the methyl acrylate are copolymerized to form a polyacrylic acid backbone, and the aminoalkanoic acid is grafted on the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 60m²/g, an oil-absorption value of 200mL/100g, a tap density of 0.10g/cm³, and a powder resistivity of 0.2Ω·cm. The conductive graphite has a particle size D50 of 4µm, a specific surface area of 10m²/g, and a tap density of 0.10g/cm³.

The parameters of the LMFP used in this example includes: a particle size D50 of 1.0µm, a specific surface area of 25m²/g, a carbon content of 2%, and a carbon-layer cladding thickness of 10 nm.

In the carbon-coated aluminum foil, the carbon-coated layer is disposed on opposite two sides of the aluminum foil, the total thickness of the carbon-coated layer is 2 µm, and the surface density of the carbon-coated layer is 1g/m².

### Example 9

The modified polyacrylic acid adhesive is formed by polymerizing an acrylic monomer, a first modified monomer, and a second modified monomer, where the acrylic monomer is sodium acrylate, the first modified monomer is p-phenylenediamine, and the second modified monomer is ethyl acrylate. Specifically, in preparing the modified polyacrylic acid adhesive, the polymerizable monomer includes 6 parts of sodium acrylate, 2 parts of p-phenylenediamine, and 2 parts of ethyl acrylate; then the sodium acrylate and ethyl acrylate are copolymerized to form a polyacrylic acid backbone, and the p-phenylenediamine is grafted onto the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 55m²/g, an oil-absorption value of 200mL/100g, a tap density of 0.15g/cm³, and a powder resistivity of 0.3Ω·cm. The conductive graphite has a particle size D50 of 10µm, a specific surface area of 7m²/g, and a tap density of 0.20g/cm³.

The parameters of the LMFP used in this example are: a particle size D50 of 1.0µm, a specific surface area of 25m²/g, a carbon content of 2%, and a carbon-layer cladding thickness of 10 nm.

In the carbon-coated aluminum foil, the carbon-coated layer is disposed on opposite two sides of the aluminum foil, the total thickness of the carbon-coated layer is 1µm, and the surface density of the carbon-coated layer is 1.5g/m².

### Example 10

The modified polyacrylic acid adhesive is formed by polymerizing an acrylic monomer, a first modified monomer, and a second modified monomer, where the acrylic monomer is sodium acrylate, the first modified monomer is vinyl alcohol, and the second modified monomer is 2-Ethylhexyl acrylate. Specifically, in preparing the modified polyacrylic acid adhesive, the polymerizable monomer includes 6 parts of sodium acrylate, 2 parts of vinyl alcohol, and 2 parts of 2-Ethylhexyl acrylate; then the sodium acrylate and the 2-Ethylhexyl acrylate are copolymerized to form a polyacrylic acid backbone, and the vinyl alcohol is grafted onto the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 70m²/g, an oil-absorption value of 200mL/100g, a tap density of 0.05g/cm³, and a powder resistivity of 0.1Ω·cm. The conductive graphite has a particle size D50 of 10µm, a specific surface area of 7m²/g, and a tap density of 0.20g/cm³.

The parameters of the LMFP used in this example are: a particle size D50 of 1.0µm, a specific surface area of 25m²/g, a carbon content of 2%, and a carbon-layer cladding thickness of 10 nm.

In the carbon-coated aluminum foil, the carbon-coated layer is disposed on opposite two sides of the aluminum foil, the total thickness of the carbon-coated layer is 2µm, and the surface density of the carbon-coated layer is 1 g/m².

### Example 11

The modified polyacrylic acid adhesive is formed by polymerizing an acrylic monomer, a first modified monomer, and a second modified monomer, where the acrylic monomer is lithium acrylate, the first modified monomer is styrene, and the second modified monomer is acrylonitrile. Specifically, in preparing the modified polyacrylic acid adhesive, the polymerizable monomer includes 6 parts of lithium acrylate, 2 parts of styrene, and 2 parts of acrylonitrile; then the lithium acrylate and the acrylonitrile are copolymerized to form a polyacrylic acid backbone, and the styrene is grafted onto the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 60m²/g, an oil-absorption value of 200mL/100g, a tap density of 0.10g/cm³, and a powder resistivity of 0.2Ω·cm. The conductive graphite has a particle size D50 of 10µm, a specific surface area of 7m²/g, and a tap density of 0.20g/cm³.

The parameters of the LMFP used in this example are: a particle size D50 of 1.0µm, a specific surface area of 25m²/g, a carbon content of 2%, and a carbon-layer cladding thickness of 10 nm.

In the carbon-coated aluminum foil, the carbon-coated layer is disposed on opposite two sides of the aluminum foil, the total thickness of the carbon-coated layer is 2 µm, and the surface density of the carbon-coated layer is 1g/m².

### Example 12

The modified polyacrylic acid adhesive is formed by polymerizing an acrylic monomer, a first modified monomer, and a second modified monomer, where the acrylic monomer is lithium acrylate, the first modified monomer is styrene, and the second modified monomer is Hexafluorobutyl acrylate. Specifically, in preparing the modified polyacrylic acid adhesive, the polymerizable monomer includes 6 parts of lithium acrylate, 2 parts of styrene, and 2 parts of hexafluorobutyl acrylate; then the lithium acrylate and the Hexafluorobutyl acrylate are copolymerized to form a polyacrylic acid backbone, and the styrene is grafted to the polyacrylic acid backbone.

The conductive slurry includes the following components in parts by weight: 6 parts of conductive carbon black, 2 parts of modified polyacrylic acid adhesive, and 2 parts of conductive graphite. Specifically, the conductive slurry provided in this example has a solid content of 6%, a pH of 3, and a viscosity of 100 mPa·s.

The conductive carbon black has a specific surface area of 50m²/g, an oil-absorption value of 200mL/100g, a tap density of 0.2g/cm³, and a powder resistivity of 0.4Ω·cm. The conductive graphite has a particle size D50 of 10µm, a specific surface area of 7m²/g, and a tap density of 0.20g/cm³.

The parameters of the LMFP used in this example are: a particle size D50 of 1.0µm, a specific surface area of 25m²/g, a carbon content of 2%, and a carbon-layer cladding thickness of 10 nm.

In the carbon-coated aluminum foil, the carbon-coated layer is disposed on opposite two sides of the aluminum foil, the total thickness of the carbon-coated layer is 1 µm, and the surface density of the carbon-coated layer is 1 g/m².

### Comparative Example 1

This comparative Example differs from Example 3 in that: in the modified polyacrylic acid adhesive, the first modified monomer is styrene, and the second modified monomer is methyl methacrylate. The remaining conditions are consistent with Example 3.

### Comparative Example 2

This comparative Example differs from Example 3 in that: in the modified polyacrylic acid adhesive, the first modified monomer is acrylonitrile, and the second modified monomer is vinyl acetate. The remaining conditions are consistent with Example 3.

### Comparative Example 3

This comparative Example differs from Example 3 in that: in the modified polyacrylic acid adhesive, the first modified monomer is p-phenylenediamine, and the second modified monomer is chitosan. The remaining conditions are consistent with Example 3.

Tests for interface peel force and interface resistance were performed on the positive electrodes prepared in the blank examples, Examples 1 to 4, and comparative Examples 1 to 3 as follows.

Interface peel force test: the prepared positive electrode was cut to a size of 30mm*300mm, and subjected to a 180°C tensile test by using a 3M tape to test the interface peel force.

Interface resistance test: the prepared positive electrode was cut to a size of 300mm*300mm; the multi-point measurement is performed on the potential distribution generated on the surface of the electrode by flowing a constant current through the surface of the electrode via an electrode plate resistance meter; the electrode is modeled, and the potential generated on the surface is obtained by a mathematical model; the dressing resistance and the interface resistance are taken as unknown numbers; the calculation of the potential is repeated until the actually measured potential and the calculated potential are consistent; and the result is outputted.

The test results are shown in Table 1.

**Table 1: Table of test results for Interface peel force and Interface resistance of different positive electrodes**

| | Interface peel force (N/m) | Interface resistance Ω·cm² |
|---|---|---|
| Example 1 | 0.747 | 0.322 |
| Example 2 | 0.436 | 0.218 |
| Example 3 | 0.659 | 0.169 |
| Example 4 | 0.337 | 0.175 |
| Example 5 | 0.552 | 0.112 |
| Example 6 | 0.297 | 0.214 |
| Example 7 | 0.231 | 0.272 |
| Example 8 | 0.314 | 0.259 |
| Example 9 | 0.375 | 0.316 |
| Example 10 | 0.284 | 0.227 |
| Example 11 | 0.596 | 0.147 |
| Example 12 | 0.413 | 0.176 |
| Comparative example 1 | 0.016 | 1.055 |
| Comparative example 2 | NG | NG |
| Comparative example 3 | 0.113 | 0.408 |
| Blank example | NG | NG |

Here, NG in comparative Example 2 and NG in the blank example indicate that during the preparation of the positive electrode, after drying, the positive electrode slurry is directly peeled off from the aluminum foil or the carbon-coated aluminum foil, so that the results of the interface peel force and the interface resistance cannot be obtained by testing.

As can be seen from Table 1, the positive electrodes prepared in Examples 1 to 12 of the present application have a significant improvement in both the interface peel force and the interface resistance with respect to the blank example, mainly because the carbon-coated aluminum foils provided in Examples 1 to 12 of the present application can provide good static conductive properties, and provide microcurrents for collecting the active substance, thereby greatly reducing the contact resistance between the LMFP positive electrode main material and the current collector, and further improving the adhesion force therebetween.

The interface peel force and the interface resistance of the positive electrodes prepared in Examples 1 to 12 of the present application were also greatly improved with respect to comparative Examples 1 to 3, mainly because a suitable monomer was selected from the modified polyacrylic adhesive used in Examples 1 to 12 of the present application, thereby improving the adhesion action and the interface peel force.

## Claims

1. A modified polyacrylic acid adhesive, the modified polyacrylic acid adhesive being polymerized from polymerizable monomers;
the polymerizable monomers comprising an acrylic monomer and a first modified monomer;
wherein the acrylic monomer comprises at least one of acrylic acid, sodium acrylate, and lithium acrylate;
the first modified monomer comprises at least one of p-phenylenediamine, aminoalkanoic acid, styrene, vinyl alcohol, and acrylonitrile;
the acrylic monomer is polymerized to form a polyacrylic acid backbone, and the first modified monomer is grafted on the polyacrylic acid backbone.

2. The modified polyacrylic acid adhesive according to claim 1, wherein a mass ratio of the acrylic monomer to the first modified monomer is (7-10): (1-2).

3. The modified polyacrylic adhesive according to claim 1 or 2, wherein the acrylic monomer is the acrylic acid and the first modified monomer is the acrylonitrile.

4. The modified polyacrylic adhesive according to claim 1 or 2, wherein the acrylic monomer is the acrylic acid and the first modified monomer is the styrene.

5. The modified polyacrylic acid adhesive of claim 1, wherein the polymerizable monomers further comprise a second modified monomer;
the second modified monomer comprises at least one of ethyl acrylate, 2-Ethylhexyl acrylate, methyl acrylate, acrylonitrile, styrene, acrylamide, and hexafluorobutyl acrylate; and the second modified monomer and the first modified monomer are different;
the acrylic monomer and the second modified monomer are copolymerized to form the polyacrylic acid backbone.

6. The modified polyacrylic adhesive according to claim 5, wherein a mass ratio of the acrylic monomer, the first modified monomer, and the second modified monomer is (6-8): (1-2): (1-2).

7. The modified polyacrylic adhesive according to claim 5 or 6, wherein the acrylic monomer is the acrylic acid, the first modified monomer is the styrene, and the second modified monomer is the acrylamide.

8. The modified polyacrylic adhesive according to claim 5 or 6, wherein the acrylic monomer is the acrylic acid, the first modified monomer is the acrylonitrile, and the second modified monomer is the acrylamide.

9. The modified polyacrylic adhesive according to any one of claims 1 to 8, wherein a glass transition temperature of the modified polyacrylic adhesive is 10°C to 80°C.

10. A carbon-coated aluminum foil comprising an aluminum foil and a carbon-coated layer coated on the aluminum foil;
wherein the carbon-coated layer is prepared from a conductive slurry;
the conductive slurry comprises following components in parts by weight: 2 to 6 parts of conductive carbon black, 2 to 7 parts of an adhesive, and 1 to 2 parts of conductive graphite;
wherein the adhesive is the modified polyacrylic acid adhesive according to any one of claims 1 to 9.

11. The carbon-coated aluminum foil according to claim 10, wherein the conductive slurry has a solid content of 6-15%, a pH of 3 to 6, and a viscosity of 50-300 mPa·s.

12. The carbon-coated aluminum foil according to claim 10, wherein the conductive carbon black has a specific surface area of 50-70m²/g, and a powder resistivity of less than or equal to 0.4Ω·cm;
the conductive graphite has a particle size D50 of 4-10µm and a tap density of 0.10-0.20g/cm³.

13. The carbon-coated aluminum foil according to claim 10, wherein the carbon-coated layer is provided on opposite two sides of the aluminum foil, a total thickness of the carbon-coated layer of the carbon-coated aluminum foil is 0.2-4µm, and a surface density of the carbon-coated layer is 0.2-2.0g/m².

14. A battery comprising a positive electrode;
wherein the positive electrode comprises the carbon-coated aluminum foil according to any one of claims 10 to 13 and a positive electrode layer;
the positive electrode layer comprises a lithium manganese iron phosphate positive electrode main material.

15. The battery according to claim 14, wherein the lithium manganese iron phosphate positive electrode main material has a particle size D50 of 0.5-1.5µm, a specific surface area of 10-40m²/g, a carbon content of 1%-2.5%, and a carbon-layer cladding thickness of 1-20nm.

16. The battery of claim 15, wherein the positive electrode has a peel force greater than 0.2N and an interface resistance less than 0.4Ω·cm².
